# EUROPÄISCHE PATENTSCHRIFT

(11) **EP 3 653 435 B1**
(45) Veröffentlichungstag und Bekanntmachung des Hinweises auf die Patenterteilung: **11.10.2023**
(21) Anmeldenummer: 19156502.7
(22) Anmeldetag: 11.02.2019
(51) Int. Cl.: B60P 3/40, B62D 21/14

(54) **FAHRZEUG ZUM TRANSPORTIEREN EINES LANGEN TRANSPORTGUTS**
VEHICLE FOR TRANSPORTING A LONG TRANSPORTED ITEM
VÉHICULE DESTINÉ AU TRANSPORT D'UN ARTICLE À TRANSPORTER ALLONGÉ

(30) Priorität: 15.11.2018 DE 202018106492 U
(43) Veröffentlichungstag der Anmeldung: 20.05.2020
(73) Patentinhaber: Greiner GmbH, 74632 Neuenstein (DE); Trans Adm, 4780 Recht - St. Vith (BE); Adams, Peter, 4770 Amel - Meyerode (BE)
(72) Erfinder: GREINER, Michael, 74626 Bretzfeld (DE); ADAMS, Peter, 4770 Meyerode/Amel (BE)
(74) Vertreter: Manitz Finsterwald Patent- und Rechtsanwaltspartnerschaft mbB

(56) Entgegenhaltungen:
- EP-A1- 0 366 577
- WO-A1-2010/034732
- WO-A1-2014/111093
- DE-A1-102009 040 200
- DE-U1-202012 010 545
- US-A1- 2007 248 431
- US-A1- 2013 038 043

## Beschreibung

Die vorliegende Erfindung betrifft ein Fahrzeug zum Transportieren eines langen Transportguts, wie beispielsweise eines Flügels für eine Windkraftanlage, umfassend einen vorderen Fahrwerkabschnitt, welcher mit einem verschwenkbaren Adapter zur Aufnahme des Transportguts versehen ist.

Ein Fahrzeug zum Transportieren eines Flügels für eine Windkraftanlage, nachfolgend kurz als Windflügel bezeichnet, ist grundsätzlich bekannt, wie zum Beispiel aus einer der WO 2010/034732 A1, WO 2014/111093 A1, US 2013/0038043 A1, EP 0 366 577 A1, US 2007/0248431 A1, DE10 2009 040 200 A1 oder DE 20 2012 010 545 U1. Üblicherweise wird der vordere Fahrwerkabschnitt durch eine Zugmaschine, wie beispielsweise eine Sattelzugmaschine angetrieben, um den von dem Adapter aufgenommenen, beispielsweise an dem Adapter angeschraubten, Windflügel, zu einem Montageort zu transportieren. Da der Transport gewöhnlich über bereits vorhandene Straßen erfolgt, kann sich bei einer Länge des zu transportierenden Windflügels im Bereich von 50 m bis 80 m oder mehr das Durchfahren von engeren Kurven als problematisch erweisen. Zur Minimierung des Wendekreises des Fahrzeugs ist es daher vorgesehen, den Windflügel mithilfe des verschwenkbaren Adapters um bis zu 70° aufzurichten. Nachteilig an diesem Konzept ist jedoch der Überhang des Windflügels über den vorderen Fahrwerkabschnitt nach hinten, welcher das Befahren zahlreicher Straßenabschnitte aus fahrdynamischen und rechtlichen Gründen ausschließt.

Zur Überwindung dieser Einschränkungen sind daher auch solche Fahrzeuge bekannt, welche einen hinteren Fahrwerkabschnitt umfassen, in den ein teleskopierbarer Längsträger integriert ist, an dessen vorderem Ende eine Kopplungsplattform zur Kopplung des Fahrzeugs mit einer Sattelzugmaschine ausgebildet ist. Für den Transport eines Windflügels wird der Längsträger so weit ausgefahren, dass das hintere Ende des Windflügels nicht signifikant über das Fahrzeug übersteht. Gesetzliche Vorschriften sind auf diese Weise erfüllt. Allerdings muss beim Durchfahren engerer Kurven der Windflügel mittels eines Krans von dem Fahrzeug abgehoben werden, damit der Längsträger zur Reduzierung der Fahrzeuglänge und des damit einhergehenden Wendekreises zusammengeschoben werden kann.

Aufgabe der Erfindung ist es ein Fahrzeug zum Transportieren eines langen Transportguts, wie beispielsweise eines Flügels für eine Windkraftanlage, zu schaffen, welches sich durch eine höhere Wirtschaftlichkeit sowohl bei der Anschaffung als auch im Betrieb auszeichnet.

Zur Lösung der Aufgabe ist ein Fahrzeug mit den Merkmalen des Anspruchs 1 vorgesehen.

Der Erfindung liegt der allgemeine Gedanke zugrunde, die Verschwenkbarkeit des Transportguts mit der Verstellbarkeit der Fahrzeuglänge zu kombinieren. Konkret umfassend das Fahrzeug hierzu einen vorderen Fahrwerkabschnitt und einen in Fahrzeuglängsrichtung dazu beabstandeten hinteren Fahrwerkabschnitt, welche mittels eines teleskopierbaren Längsträgers miteinander verbunden sind, wobei der vordere Fahrwerkabschnitt zusätzlich mit einem verschwenkbaren Adapter zur Aufnahme des Transportguts versehen ist. Mit Hilfe des teleskopierbaren Längsträgers lässt sich die Länge des Fahrzeugs einerseits also zur Einhaltung gesetzlicher Vorschriften und zur Stabilisierung der Fahreigenschaften an die Länge des Transportguts anpassen. Andererseits lässt sich für das Durchfahren einer engeren Kurve das Transportgut mithilfe des verschwenkbaren Adapters aufrichten und die Fahrzeuglänge durch Zusammenschieben des teleskopierbaren Längsträgers auf ein erforderliches Maß reduzieren. Auf diese Weise kann unter Einhaltung gesetzlicher Vorschriften ein Großteil der zur Verfügung stehenden Straßen befahren werden, ohne dass zusätzlich ein Kran für das Durchfahren engerer Kurven bereitgestellt werden muss.

Vorteilhafte Ausbildungen der Erfindung sind den Unteransprüchen, der Beschreibung und der Zeichnung zu entnehmen.

Gemäß einer Ausführungsform weist der teleskopierbare Längsträger einen polygonalen Grundquerschnitt mit mehr als vier Ecken auf. Dieser spezielle Querschnitt trägt zu einer besonderen Stabilität des teleskopierbaren Längsträgers bei, die es dem teleskopierbaren Längsträger letztlich erlaubt, die beim Aufrichten des von dem verschwenkbaren Adapter aufgenommenen Transportguts auftretenden Kräfte zuverlässig aufzunehmen, ohne die Struktur des Trägers bleibend zu verformen. Dies ist insbesondere von Bedeutung beim Transport von Windflügeln, welche ein Eigengewicht in der Größenordnung von 20 t bis 30 t und einen Schwerpunktsabstand von 20 m bis 28 m von dessen Grundfläche aufweisen können. Es versteht sich, dass die Erfindung jedoch nicht auf diesen Leistungsbereich beschränkt ist, sondern sich nach den hier beschriebenen Prinzipien auch größere oder kleinere Fahrzeuge konstruieren lassen.

Vorteilhafterweise ist der teleskopierbare Längsträger lösbar mit dem vorderen und dem hinteren Fahrwerkabschnitt verbunden. Dies ermöglicht eine Demontage des teleskopierbaren Längsträgers von den Fahrwerkabschnitten und somit eine Nutzung des vorderen bzw. hinteren Fahrwerkabschnitts jeweils für sich genommen, beispielsweise zum Transport kürzerer Güter. Das Fahrzeug ist insgesamt also vielseitiger einsetzbar, was zu dessen Wirtschaftlichkeit beiträgt. Außerdem ermöglicht die lösbare Verbindung des teleskopierbaren Längsträgers den Aufbau des Fahrzeugs unter Verwendung gegebenenfalls bereits vorhandener Fahrwerkabschnitte, wodurch sich die Anschaffungskosten reduzieren lassen.

Gemäß einer weiteren Ausführungsform liegt der teleskopierbare Längsträger auf dem hinteren Fahrwerkabschnitt auf. Der teleskopierbare Längsträger ist also nicht in den hinteren Fahrwerkabschnitt integriert, d.h. es kann ein gewöhnliches Schwerlastfahrwerk als hinterer Fahrwerkabschnitt dienen. Zur sichereren Lagerung des teleskopierbaren Längsträgers an dem hinteren Fahrwerkabschnitt kann der teleskopierbare Längsträger an einer Ladefläche des hinteren Fahrwerkabschnitts befestigt sein, beispielsweise mittels Schraubverbindungen.

Um die beim Aufrichten des von dem verschwenkbaren Adapter aufgenommenen Transportguts auftretenden Kräfte optimal in den teleskopierbaren Längsträger einleiten zu können, ist der teleskopierbare Längsträger für einen Gütertransport bevorzugt stirnseitig an dem vorderen Fahrwerkabschnitt anbringbar. Beispielsweise kann die Anbringung des teleskopierbaren Längsträgers an dem vorderen Fahrwerkabschnitt mittels Laschen und Bolzen erfolgen.

Zur Minimierung der Gesamtlänge des Fahrzeugs, beispielsweise für eine Leerfahrt, ist der teleskopierbare Längsträger vorteilhafterweise auf dem vorderen Fahrwerkabschnitt ablegbar und insbesondere an diesem fixierbar.

Gemäß einer weiteren Ausführungsform umfasst der teleskopierbare Längsträger mehrere, beispielsweise drei, ineinander schiebbare Segmente. So kann der teleskopierbare Längsträger zumindest ein inneres Segment, welches im zusammengeschobenen Zustand des Längsträgers innen liegt, und ein äußeres Segment, welches im zusammengeschobenen Zustand des Längsträgers außen liegt, und gegebenenfalls wenigstens ein dazwischenliegendes mittleres Segment aufweisen. Vorteilhafterweise ist das äußere Segment an dem hinteren Fahrwerkabschnitt und das innere Segment an dem vorderen Fahrwerkabschnitt angebracht.

Beispielsweise kann der teleskopierbare Längsträger im zusammengeschobenen Zustand eine Länge im Bereich von 15 m bis 30 m, bevorzugt im Bereich von 20 m bis 25 m aufweisen. Entsprechend kann der teleskopierbare Längsträger im maximal ausgefahrenen Zustand eine Länge im Bereich von 40 m bis 80 m, bevorzugt im Bereich von 50 m bis 70 m aufweisen. Es versteht sich, dass grundsätzlich auch kleinere oder größere Längen des teleskopierbaren Längsträgers vorstellbar sind.

Gemäß noch einer weiteren Ausführungsform weist der hintere Fahrwerkabschnitt ein Widerlager zur Aufnahme des Transportguts auf. Hierdurch kann das von dem verschwenkbaren Adapter aufgenommene Transportgut nicht nur im Bereich seines vorderen Endes, sondern auch im Bereich seines hinteren Endes am Fahrzeug fixiert werden und, insbesondere wenn es sich bei dem Transportgut um einen Windflügel handelt, ein unerwünschtes Aufschwingen desselben verhindert werden. Beispielsweise kann das Widerlager oberhalb des teleskopierbaren Längsträgers angeordnet sein.

Gemäß noch einer weiteren Ausführungsform ist ein, insbesondere hydraulischer, Schwenkantrieb zur Verschwenkung des Adapters vorgesehen. Wie bereits erwähnt ermöglicht die Verschwenkung des Adapters ein Aufrichten des von dem Adapter aufgenommenen Transportguts, beispielsweise um das hintere Ende des Transportguts in Kurven über Hindernisse schweben zu lassen. Die Schwenkfunktion kann aber auch dazu verwendet werden, um den hinteren Fahrwerkabschnitt für ein Zusammenschieben des teleskopierbaren Längsträgers zu entlasten.

Um das Gewicht des aufgenommenen Transportguts möglichst optimal auf die Straße zu bringen, sind der vordere Fahrwerkabschnitt und der hintere Fahrwerkabschnitt vorteilhafterweise jeweils mehrachsig, beispielsweise fünfachsig, ausgebildet.

Nachfolgend wird die Erfindung anhand einer möglichen Ausführungsform rein beispielhaft unter Bezugnahme auf die beigefügte Zeichnung beschrieben. Es zeigen:
- Fig. 1: eine Seitenansicht eines erfindungsgemäßen Transportfahrzeugs mit darauf gelagertem Windflügel und angekoppelt an eine Zugmaschine;
- Fig. 2A: eine perspektivische Ansicht des Transportfahrzeugs von Fig. 1 mit einem ausgefahrenen Längsträger;
- Fig. 2B: eine perspektivische Ansicht des Transportfahrzeugs von Fig. 1 mit einem zusammengeschobenen Längsträger;
- Fig. 3A: eine perspektivische Ansicht eines teleskopierbaren Längsträgers des Transportfahrzeugs von Fig. 1 im vollständig eingefahrenen Zustand;
- Fig. 3B: eine perspektivische Ansicht des Längsträgers von Fig. 3A im maximal ausgefahrenen Zustand;
- Fig. 3C: eine Querschnittsansicht des Längsträgers von Fig. 3A;
- Fig. 3D: eine Querschnittsansicht des Längsträgers von Fig. 3A gemäß einer alternativen Ausführungsform;
- Fig. 4: eine Seitenansicht des an eine Zugmaschine angekoppelten Transportfahrzeugs von Fig. 1 während einer Leerfahrt;
- Fig. 5: eine Seitenansicht eines vorderen Fahrwerkabschnitts des Transportfahrzeugs von Fig. 1 mit einem aufgenommenen und teilweise aufgerichteten Windflügel;
- Fig. 6: eine Seitenansicht des an eine Zugmaschine angekoppelten Transportfahrzeugs von Fig. 1 mit einem aufgenommenen und teilweise aufgerichteten Windflügel und zusammengefahrenem Längsträger.

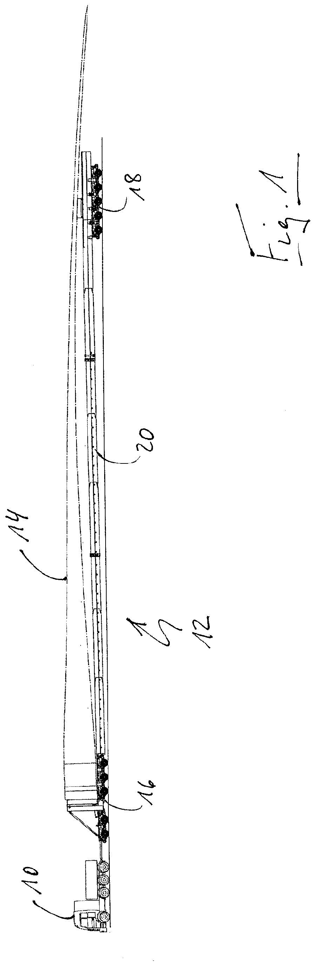

In Fig. 1 ist ein an eine Zugmaschine 10, hier ein Lastkraftwagen, angekoppeltes Transportfahrzeug 12 zum Transportieren eines langen Transportguts 14 dargestellt. Im vorliegenden Ausführungsbeispiel handelt es sich bei dem Transportgut 14 um einen Windflügel für eine Windkraftanlage, welcher eine Länge von bis zu 90 m und ein Eigengewicht von bis zu 30 Tonnen aufweisen kann.

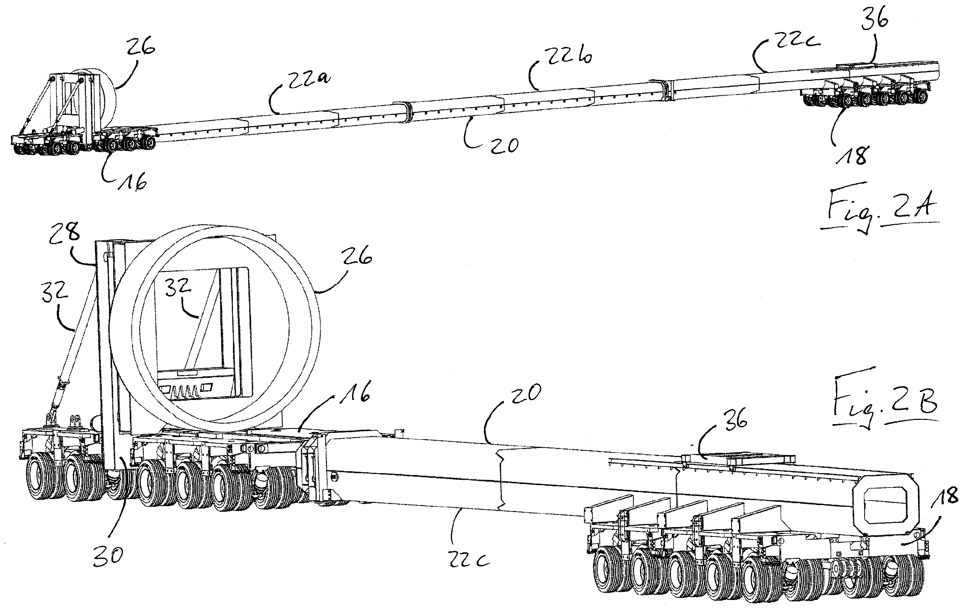

Wie Fig. 2A und 2B genauer zeigen, umfasst das Transportfahrzeug 12 einen vorderen Fahrwerkabschnitt 16 und einen hinteren Fahrwerkabschnitt 18, die durch einen teleskopierbaren Längsträger 20 miteinander verbunden sind. Bei dem vorderen und hinteren Fahrwerkabschnitt 16, 18 handelt es sich jeweils um ein fünfachsiges Schwerlastfahrwerk.

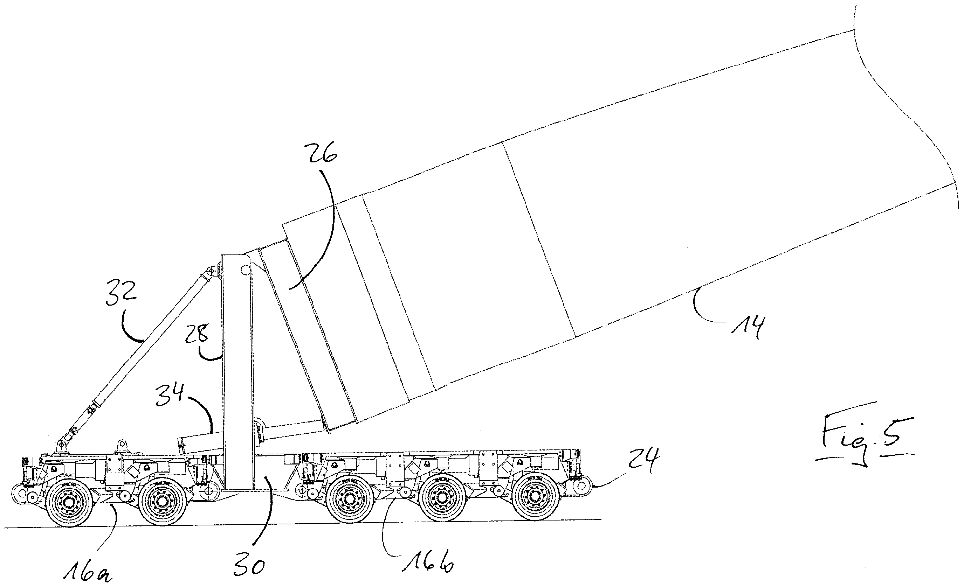

Der teleskopierbare Längsträger 20 setzt sich aus drei ineinander schiebbaren Segmenten 22 zusammen, genauer gesagt einem inneren Segment 22a, einem mittleren Segment 22b und einem äußeren Segment 22c. Das hintere Segment 22c liegt mit einem optionalen hinteren Überstand, welcher im vorliegenden Ausführungsbeispiel 1,5 m beträgt, auf dem hinteren Fahrwerkabschnitt 18 auf und ist in geeigneter Weise an diesem befestigt, beispielsweise verschraubt. Das innere Segment 22a ist dagegen an dem vorderen Fahrwerkabschnitt 16 angebracht. Für eine Transportfahrt erfolgt die Ankopplung des teleskopierbaren Längsträgers 20 mit dem vorderen Fahrwerkabschnitt 16 stirnseitig, das heißt eine vordere Stirnseite des inneren Segments 22a wird an einer hinteren Stirnseite des vorderen Fahrwerkabschnitts 16 befestigt, und zwar mittels entsprechend vorgesehener Laschen 24, durch die ein geeigneter Bolzen hindurchgeschoben wird (Fig. 5).

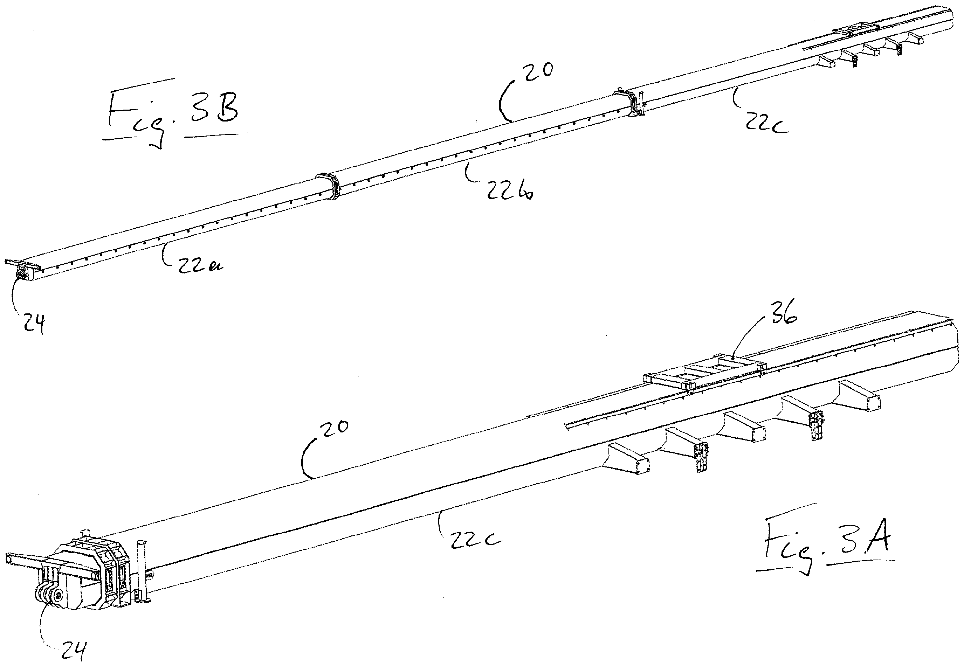

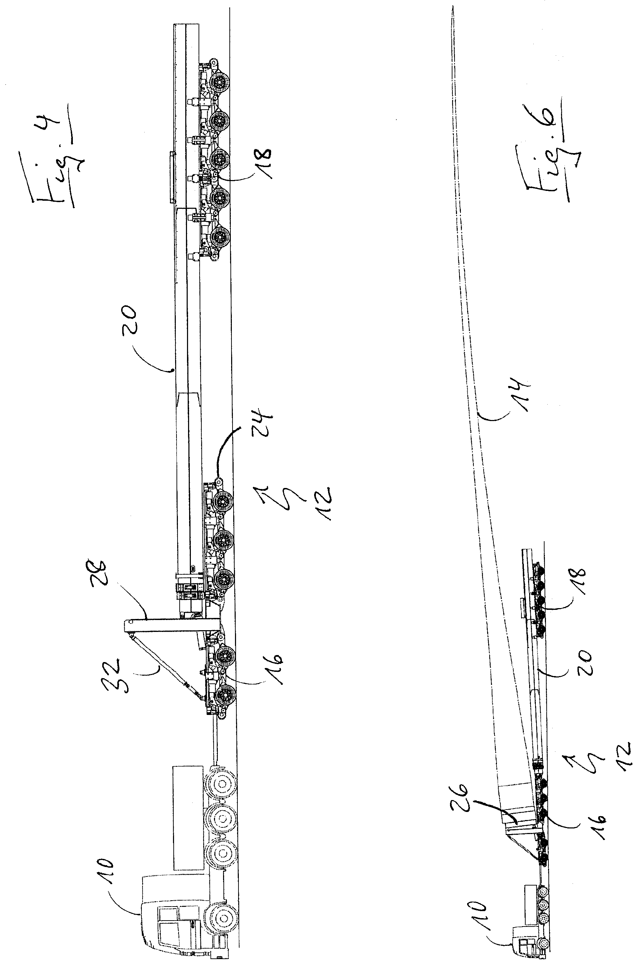

Im vorliegenden Ausführungsbeispiel weist der vollständig zusammengeschobene telekopierbare Längsträger 20 eine Länge von 23 m auf (Fig. 3A). Ist der teleskopierbare Längsträger 20 wie in Fig. 2 dargestellt stirnseitig mit dem vorderen Fahrwerkabschnitt 16 verbunden, so beträgt die Gesamtlänge des Transportfahrzeugs 12 bei vollständig eingefahrenem Längsträger 20 im vorliegenden Ausführungsbeispiel 32 m. Diese Gesamtlänge lässt sich für eine Leerfahrt des Transportfahrzeugs 12 auf etwa 27 m reduzieren, indem der teleskopierbare Längsträger 20 nicht stirnseitig mit dem vorderen Fahrwerkabschnitt 16 gekoppelt wird, sondern stattdessen ein vorderer Endabschnitt des eingefahrenen teleskopierbaren Längsträgers 20 auf den vorderen Fahrwerkabschnitt 16 aufgelegt und in geeigneter Weise mit diesem befestigt wird, beispielsweise verschraubt wird, wie es in Fig. 4 dargestellt ist.

In seinem maximal ausgefahrenen Zustand (Fig. 3B) weist der teleskopierbare Längsträger 20 des vorliegenden Ausführungsbeispiels eine Gesamtlänge von 63 m auf, woraus sich eine Gesamtlänge des Transportfahrzeugs 12 von 72 m ergibt, wenn der teleskopierbare Längsträger 20 stirnseitig an dem vorderen Fahrwerkabschnitt 16 angebracht ist.

Wie Fig. 5 detaillierter zeigt, ist der vordere Fahrwerkabschnitt 16 mit einem verschwenkbaren Adapter 26 zur Aufnahme des Windflügels 14 versehen. Der verschwenkbare Adapter 26 ist in einem oberen Bereich an einem Vertikalträger 28 drehbar gelagert, dessen Basis 30 im vorliegenden Ausführungsbeispiel zwischen einem vorderen Teil 16a und einem hinteren Teil 16b des vorderen Fahrwerkabschnitts 16 gehalten ist. Es versteht sich, dass es unter entsprechender Anpassung der Basis 30 alternativ auch möglich wäre, den Vertikalträger 28 auf den vorderen Fahrwerkabschnitt 16 aufzusetzen. Zur Stabilisierung des Vertikalträgers 28 sind zwei Stützstreben 32 vorgesehen, deren oberes Ende jeweils im oberen Bereich des Vertikalträgers 28 angreift und deren unteres Ende jeweils in einem vorderen Bereich des vorderen Teils 16a des vorderen Fahrwerkabschnitts 16 verankert ist. Zur Verschwenkung des verschwenkbaren Adapters 26 ist ein hydraulischer Schwenkantrieb 34 vorgesehen, der in einem unteren Bereich des verschwenkbaren Adapters 26 angreift.

Bei Betätigung des Schwenkantriebs 34 hebt der verschwenkbare Adapter 26 den darin aufgenommenen Windflügel 14 an, wodurch der hintere Fahrwerkabschnitt 18 entlastet wird und der teleskopierbare Längsträger 20 beispielsweise für das Durchfahren einer Kurve zusammengeschoben werden kann (Fig. 6). Bei entsprechender Ausbildung von Schwenkantrieb 34 und Adapter 26 kann der Windflügel 14 sogar um einen Winkel von bis 70° aufgerichtet werden, was es ermöglicht, den Windflügel 14 beim Durchführen einer Kurve über gegebenenfalls vorhandene Hindernisse schweben zu lassen.

Auf der Ladefläche des vorderen Teils 16a des vorderen Fahrwerkabschnitts 16 können nicht dargestellte Kontergewichte aufgelegt sein, um dem Drehmoment entgegenzuwirken, welches durch den angehobenen Windflügel 14 ausgeübt wird. Die resultierenden Zugkräfte werden durch die Stützstreben 32 in den Schwenkadapter übertragen.

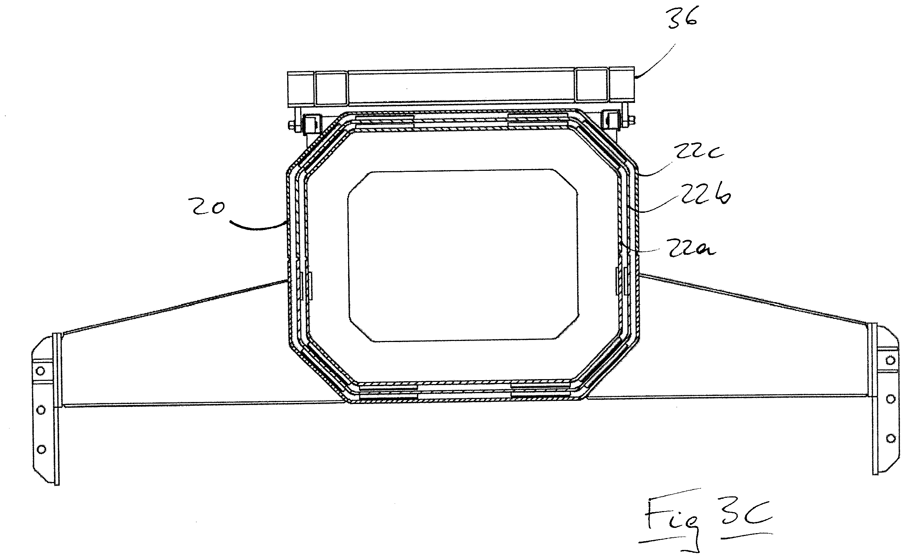

Wie Fig. 3C zu entnehmen ist, weist der teleskopierbare Längsträger 20 gemäß einer ersten Ausführungsform einen achteckigen Grundquerschnitt auf.

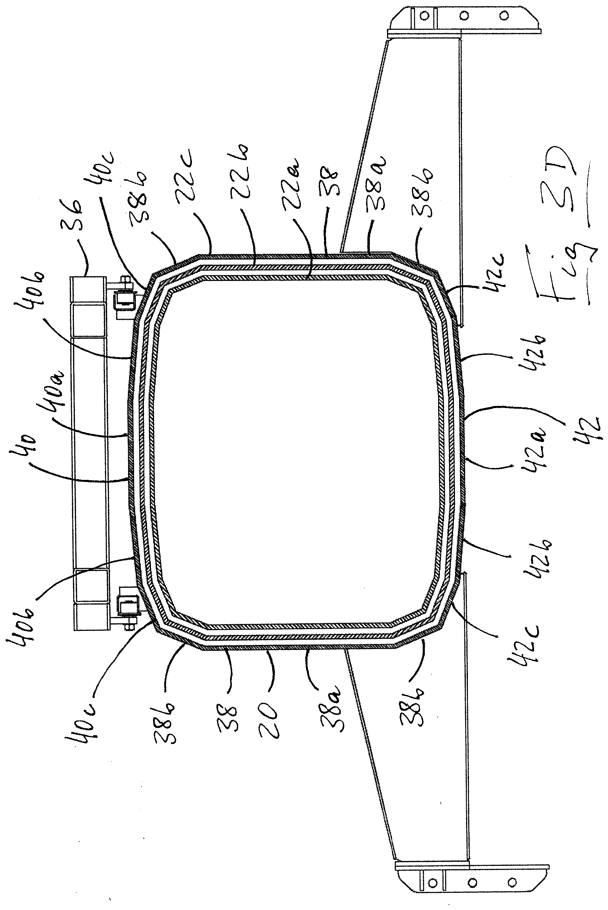

Alternativ kann der teleskopierbare Längsträger 20 auch einen anderen polygonalen Grundquerschnitt mit mehr als vier Ecken aufweisen, beispielsweise derart, wie in Fig. 3D dargestellt. Gemäß dieser zweiten Ausführungsform umfasst jedes der Segmente 22a, 22b, 22c zwei einander gegenüberliegende Seitenwände 38, die jeweils einen vertikal orientierten geraden Seitenwandabschnitt 38a aufweisen, welcher an seinem oberen und unteren Ende jeweils in einen nach innen geneigten schrägen Seitenwandabschnitt 38b übergeht. Die oberen geneigten Seitenwandabschnitte 38b sind durch eine konvex ausgebildete obere Wand 40 und die unteren geneigten Seitenwandabschnitte 38b durch eine entsprechende konvex ausgebildete untere Wand 42 miteinander verbunden. Sowohl die obere Wand 40 als auch die untere Wand 42 weisen jeweils einen zentralen Horizontalabschnitt 40a, 42a auf, von dem sich zu den Seitenwänden 38 hin jeweils mehrere, im vorliegenden Ausführungsbeispiel zwei, Schrägabschnitte 40b, 40c, 42b, 42c anschließen. Die jeweils äußeren Schrägabschnitte 40c, 42c erstrecken sich unter einem Winkel im Bereich von 20° bis 25°, im vorliegenden Ausführungsbeispiel 22,5°, zur Horizontalen und gehen an ihren äußeren Enden jeweils in einen geneigten Seitenwandabschnitt 38b über.

Sowohl der achteckige Querschnitt von Fig. 3C als auch der polygonale Querschnitt von Fig. 3D verleihen dem teleskopierbaren Längsträger 20 besondere Stabilität und tragen dazu bei, dass der teleskopierbare Längsträger 20 die bei einem Aufrichten des aufgenommenen Windflügels 14 stirnseitig eingeleiteten Kräfte zuverlässig aufnehmen kann, ohne die Struktur des Trägers bleibend zu verformen. Der polygonale Querschnitt von Fig. 3D weist gegenüber dem achteckigen Querschnitt von Fig. 3C zusätzlich den Vorteil auf, dass zwischen den äußeren Schrägabschnitten 40c, 42c benachbarter Segmente 22a, 22b, 22c Gleitoder Wälzlager angeordnet werden können, welche das Ausfahren bzw. Zusammenschieben des teleskopierbaren Längsträgers 20 erleichtern.

Im Bereich des hinteren Fahrwerkabschnitts 18 ist das äußere Segment 22c des teleskopierbaren Längsträgers 20 an seiner Oberseite mit einem Widerlager 36 zur Aufnahme des abgelegten Windflügels 14 versehen. Durch eine Befestigung des Windflügels 14 an dem Widerlager 36 kann ein vertikales und/oder horizontales Aufschwingen des Windflügels 14 während der Fahrt wirksam unterbunden werden.

### Bezuazeichenliste

- 10: Zugmaschine
- 12: Transportfahrzeug
- 14: Transportgut / Windflügel
- 16: vorderer Fahrwerkabschnitt
- 16a: vorderer Teil
- 16b: hinterer Teil
- 18: hinterer Fahrwerkabschnitt
- 20: teleskopierbarer Längsträger
- 22: Segment
- 22a: inneres Segment
- 22b: mittleres Segment
- 22c: äußeres Segment
- 24: Lasche
- 26: verschwenkbarer Adapter
- 28: Vertikalträger
- 30: Basis
- 32: Stützstrebe
- 34: Schwenkantrieb
- 36: Widerlager
- 38: Seitenwand
- 38a: gerader Seitenwandabschnitt
- 38b: geneigter Seitenwandabschnitt
- 40: obere Wand
- 40a: Horizontalabschnitt
- 40b: Schrägabschnitt
- 40c: Schrägabschnitt
- 42: untere Wand
- 42a: Horizontalabschnitt
- 42b: Schrägabschnitt
- 42c: Schrägabschnitt

## Patentansprüche

1. Fahrzeug (12) zum Transportieren eines langen Transportguts (14), wie beispielsweise eines Flügels für eine Windkraftanlage, umfassend einen vorderen Fahrwerkabschnitt (16) und einen in Fahrzeuglängsrichtung dazu beabstandeten hinteren Fahrwerkabschnitt (18), wobei der vordere Fahrwerkabschnitt (16) und der hintere Fahrwerkabschnitt (18) mittels eines teleskopierbaren Längsträgers (20) miteinander verbunden sind, **dadurch gekennzeichnet, dass** der vordere Fahrwerkabschnitt (16) einen Vertikalträger (28) aufweist, dessen Basis (30) zwischen einem vorderen Teil (16a) und einem hinteren Teil (16b) des vorderen Fahrwerkabschnitts (16) gehalten ist und in dessen oberem Bereich ein verschwenkbarer Adapter (26) zur Aufnahme des Transportguts (14) drehbar gelagert ist.

2. Fahrzeug (12) nach Anspruch 1,
**dadurch gekennzeichnet , dass**
der teleskopierbare Längsträger (20) einen polygonalen Grundquerschnitt mit mehr als vier Ecken aufweist.

3. Fahrzeug (12) nach Anspruch 1 oder 2,
**dadurch gekennzeichnet , dass**
der teleskopierbare Längsträger (20) lösbar mit dem vorderen und dem hinteren Fahrwerkabschnitt (16, 18) verbunden ist.

4. Fahrzeug (12) nach zumindest einem der vorstehenden Ansprüche,
**dadurch gekennzeichnet , dass**
der teleskopierbare Längsträger (20) auf dem hinteren Fahrwerkabschnitt (18) aufliegt.

5. Fahrzeug (12) nach zumindest einem der vorstehenden Ansprüche,
**dadurch gekennzeichnet , dass**
der teleskopierbare Längsträger (20) an einer Ladefläche des hinteren Fahrwerkabschnitts (18) befestigt ist.

6. Fahrzeug (12) nach zumindest einem der vorstehenden Ansprüche,
**dadurch gekennzeichnet , dass**
der teleskopierbare Längsträger (20) für einen Gütertransport stirnseitig an dem vorderen Fahrwerkabschnitt (16) anbringbar ist.

7. Fahrzeug (12) nach zumindest einem der vorstehenden Ansprüche,
**dadurch gekennzeichnet , dass**
die Anbringung des teleskopierbaren Längsträgers (20) an dem vorderen Fahrwerkabschnitt (16) mittels Laschen (24) und Bolzen erfolgt.

8. Fahrzeug (12) nach zumindest einem der vorstehenden Ansprüche,
**dadurch gekennzeichnet , dass**
der teleskopierbare Längsträger (20) für eine Leerfahrt auf dem vorderen Fahrwerkabschnitt (16) ablegbar ist.

9. Fahrzeug (12) nach zumindest einem der vorstehenden Ansprüche,
**dadurch gekennzeichnet , dass**
der teleskopierbare Längsträger (20) mehrere, beispielsweise drei, ineinander schiebbare Segmente (22) umfasst.

10. Fahrzeug (12) nach zumindest einem der vorstehenden Ansprüche,
**dadurch gekennzeichnet , dass**
der teleskopierbare Längsträger (20) zumindest ein inneres Segment (22a), welches im zusammengeschobenen Zustand des Längsträgers (20) innen liegt, und ein äußeres Segment (22c), welches im zusammengeschobenen Zustand des Längsträgers (20) außen liegt, und gegebenenfalls wenigstens ein dazwischenliegendes mittleres Segment (22b) aufweist.

11. Fahrzeug (12) nach Anspruch 10,
**dadurch gekennzeichnet , dass**
das äußere Segment (22c) an dem hinteren Fahrwerkabschnitt (18) und das innere Segment (22a) an dem vorderen Fahrwerkabschnitt (16) angebracht ist.

12. Fahrzeug (12) nach zumindest einem der vorstehenden Ansprüche,
**dadurch gekennzeichnet , dass**
der hintere Fahrwerkabschnitt (18) ein Widerlager (36) zur Aufnahme des Transportguts (14) aufweist.

13. Fahrzeug (12) nach Anspruch 12,
**dadurch gekennzeichnet , dass**
das Widerlager (36) oberhalb des teleskopierbaren Längsträgers (20) angeordnet ist.

14. Fahrzeug (12) nach zumindest einem der vorstehenden Ansprüche,
**dadurch gekennzeichnet , dass**
ein, insbesondere hydraulischer, Schwenkantrieb (34) zur Verschwenkung des Adapters (26) vorgesehen ist.

15. Fahrzeug (12) nach zumindest einem der vorstehenden Ansprüche,
**dadurch gekennzeichnet , dass**
der vordere Fahrwerkabschnitt (16) und der hintere Fahrwerkabschnitt (18) jeweils mehrachsig, beispielsweise fünfachsig, ausgebildet sind, und/oder der Längsträger (20) unter Belastung, insbesondere durch Eigengewicht und resultierend aus einer Verschwenkung des Transportguts (14), teleskopierbar ist.

## Claims

1. A vehicle (12) for transporting a long transport item (14), such as a blade for a wind turbine, comprising a front chassis section (16) and a rear chassis section (18) spaced apart therefrom in the longitudinal direction of the vehicle, wherein the front chassis section (16) and the rear chassis section (18) are connected to one another by means of a telescopic longitudinal member (20), **characterized in that** the front chassis section (16) has a vertical member (28) whose base (30) is held between a front part (16a) and a rear part (16b) of the front chassis section (16) and in whose upper region a pivotable adapter (26) for receiving the transport item (14) is rotatably supported.

2. A vehicle (12) in accordance with claim 1,
**characterized in that**
the telescopic longitudinal member (20) has a polygonal base cross-section with more than four corners.

3. A vehicle (12) in accordance with claim 1 or 2,
**characterized in that**
the telescopic longitudinal member (20) is releasably connected to the front and the rear chassis section (16, 18).

4. A vehicle (12) in accordance with at least one of the preceding claims,
**characterized in that**
the telescopic longitudinal member (20) rests on the rear chassis section (18).

5. A vehicle (12) in accordance with at least one of the preceding claims,
**characterized in that**
the telescopic longitudinal member (20) is fastened to a loading surface of the rear chassis section (18).

6. A vehicle (12) in accordance with at least one of the preceding claims,
**characterized in that**
the telescopic longitudinal member (20) can be attached at the front side to the front chassis section (16) for goods transportation.

7. A vehicle (12) in accordance with at least one of the preceding claims,
**characterized in that**
the attachment of the telescopic longitudinal member (20) to the front chassis section (16) takes place by means of lugs (24) and bolts.

8. A vehicle (12) in accordance with at least one of the preceding claims,
**characterized in that**
the telescopic longitudinal member (20) can be placed on the front chassis section (16) for an empty run.

9. A vehicle (12) in accordance with at least one of the preceding claims,
**characterized in that**
the telescopic longitudinal member (20) comprises a plurality of segments (22), for example three segments (22), which can be pushed into one another.

10. A vehicle (12) in accordance with at least one of the preceding claims,
**characterized in that**
the telescopic longitudinal member (20) has at least one inner segment (22a), which lies at the inside in the pushed-together state of the longitudinal member (20), and an outer segment (22c), which lies at the outside in the pushed-together state of the longitudinal member (20), and optionally at least one middle segment (22b) disposed therebetween.

11. A vehicle (12) in accordance with claim 10,
**characterized in that**
the outer segment (22c) is attached to the rear chassis section (18) and the inner segment (22a) is attached to the front chassis section (16).

12. A vehicle (12) in accordance with at least one of the preceding claims,
**characterized in that**
the rear chassis section (18) has an abutment (36) for receiving the transport item (14).

13. A vehicle (12) in accordance with claim 12,
**characterized in that**
the abutment (36) is arranged above the telescopic longitudinal member (20).

14. A vehicle (12) in accordance with at least one of the preceding claims,
**characterized in that**
a pivot drive (34), in particular a hydraulic pivot drive (34), is provided for pivoting the adapter (26).

15. A vehicle (12) in accordance with at least one of the preceding claims,
**characterized in that**
the front chassis section (16) and the rear chassis section (18) are each configured as having multiple axles, for example five axles, and/or the longitudinal beam (20) can be telescoped under load, in particular by its own weight and resulting from a pivoting of the transport item (14).

## Revendications

1. Véhicule (12) destiné au transport d'un article à transporter long (14), comme par exemple une pale pour une éolienne, comprenant une section de châssis avant (16) et une section de châssis arrière (18) espacée de celle-ci dans la direction longitudinale du véhicule, la section de châssis avant (16) et la section de châssis arrière (18) étant reliées entre elles au moyen d'un longeron télescopique (20),
**caractérisé en ce que**
la section de châssis avant (16) comprend un support vertical (28) dont la base (30) est maintenue entre une partie avant (16a) et une partie arrière (16b) de la section de châssis avant (16) et dont la zone supérieure est pourvue d'un adaptateur pivotant (26) monté de façon mobile en rotation et destiné à recevoir l'article à transporter (14).

2. Véhicule (12) selon la revendication 1,
**caractérisé en ce que**
le longeron télescopique (20) présente une section transversale de base polygonale avec plus de quatre coins.

3. Véhicule (12) selon la revendication 1 ou 2,
**caractérisé en ce que**
le longeron télescopique (20) est relié de manière amovible aux sections de châssis avant et arrière (16, 18).

4. Véhicule (12) selon l'une au moins des revendications précédentes,
**caractérisé en ce que**
le longeron télescopique (20) repose sur la section de châssis arrière (18).

5. Véhicule (12) selon l'une au moins des revendications précédentes,
**caractérisé en ce que**
le longeron télescopique (20) est fixé à une surface de chargement de la section de châssis arrière (18).

6. Véhicule (12) selon l'une au moins des revendications précédentes,
**caractérisé en ce que**
pour un transport de marchandises, le longeron télescopique (20) peut être fixé du côté frontal sur la section de châssis avant (16).

7. Véhicule (12) selon l'une au moins des revendications précédentes,
**caractérisé en ce que**
la fixation du longeron télescopique (20) sur la section de châssis avant (16) est réalisée au moyen de pattes (24) et de boulons.

8. Véhicule (12) selon l'une au moins des revendications précédentes,
**caractérisé en ce que**
pour un trajet à vide, le longeron télescopique (20) peut être déposé sur la section de châssis avant (16).

9. Véhicule (12) selon l'une au moins des revendications précédentes,
**caractérisé en ce que**
le longeron télescopique (20) comprend plusieurs segments (22), par exemple trois, pouvant coulisser les uns dans les autres.

10. Véhicule (12) selon l'une au moins des revendications précédentes,
**caractérisé en ce que**
le longeron télescopique (20) comprend au moins un segment intérieur (22a) qui, à l'état rétracté du longeron (20), est situé à l'intérieur, et un segment extérieur (22c) qui, à l'état rétracté du longeron (20), est situé à l'extérieur, et le cas échéant au moins un segment central (22b) situé entre les deux.

11. Véhicule (12) selon la revendication 10,
**caractérisé en ce que**
le segment extérieur (22c) est fixé sur la section de châssis arrière (18) et le segment intérieur (22a) est fixé sur la section de châssis avant (16).

12. Véhicule (12) selon l'une au moins des revendications précédentes,
**caractérisé en ce que**
la section de châssis arrière (18) comprend une contrebutée (36) destinée à recevoir l'article à transporter (14).

13. Véhicule (12) selon la revendication 12,
**caractérisé en ce que**
la contrebutée (36) est disposée au-dessus du longeron télescopique (20).

14. Véhicule (12) selon l'une au moins des revendications précédentes,
**caractérisé en ce que**
il est prévu un entraînement de pivotement (34), en particulier hydraulique, pour faire pivoter l'adaptateur (26).

15. Véhicule (12) selon l'une au moins des revendications précédentes,
**caractérisé en ce que**
la section de châssis avant (16) et la section de châssis arrière (18) sont réalisées chacune à plusieurs axes, par exemple à cinq axes, et/ou le longeron (20) est télescopique sous une charge, en particulier formée par son propre poids et résultant d'un pivotement de l'article à transporter (14).
